# EUROPEAN PATENT SPECIFICATION

(11) **EP 4 149 870 B1**
(45) Date of publication and mention of the grant of the patent: **24.04.2024**
(21) Application number: 21725819.3
(22) Date of filing: 28.04.2021
(51) Int. Cl.: B65H 63/00, G01N 21/95

(54) **DEVICE AND METHOD FOR AUTOMATICALLY CHECKING THE QUALITY OF A SPOOL OF THREAD FOR FABRICS**
VORRICHTUNG UND VERFAHREN ZUR AUTOMATISCHEN ÜBERPRÜFUNG DER QUALITÄT EINER FADENSPULE FÜR GEWEBE
DISPOSITIF ET PROCÉDÉ DE VÉRIFICATION AUTOMATIQUE DE LA QUALITÉ D'UNE BOBINE DE FIL POUR TISSUS

(30) Priority: 12.05.2020 IT 202000010720
(43) Date of publication of application: 22.03.2023
(73) Proprietor: THEMA 2 S.R.L., 46024 Moglia (MN) (IT)
(72) Inventor: MICHELINI, Claudio, 46024 Moglia, Mantova (IT); GUERZONI, Giovanni, 46024 Moglia, Mantova (IT)
(74) Representative: Gualeni, Nadia
(86) International application number: PCT/IB2021/053512
(87) International publication number: WO 2021/229344

(56) References cited:
- EP-A1- 0 934 897
- DE-A1- 3 941 008
- JP-A- H06 100 240
- JP-A- H07 125 925
- KR-B1- 101 537 552
- US-A- 4 866 289
- US-A- 5 315 366
- US-A- 5 767 963

## Description

The present invention relates to a device for automatically checking the quality of a spool of thread for fabrics, i.e., a device capable of carrying out the automatic analysis of the physical nature defects of a spool of thread.

In each thread spool production line a step of checking the quality of the spool is provided. Currently, the quality of the spools of thread is checked entirely manually: the operator checks for defects, such as "broken burrs", "ties" or other morphological defects, simply with the naked eye, using a light source. Once possible defects have been identified, the spools of thread are suitably classified by the operator, who populates a central Database.

The main disadvantage of the manual check lies in that, given the small size of the defects to be found and the similarity between the spools of thread to be checked, the operator returns subjective feedbacks. In particular, the identification of defects and the consequent classification by the operator mainly depends on the experience and competence of the individual, as well as on the ability thereof to maintain a high level of attention and constant concentration throughout the shift, on the time that the operator has available for each spool and on the conditions of the external environment (for example, on the presence or absence of light sources and the mutability thereof).

KR 101 537 552 B1, JP H07 125825 A and US 4 866 289 A disclose a device for automatically checking the quality of a spool of thread for fabrics.

It is the object of the present invention to solve the issues related to the manual quality check of the spools of thread.

In particular, it is the object of the present invention to provide a device for automatically checking the quality of a spool of thread, capable of carrying out an objective and reliable analysis of the physical nature defects of a spool of thread.

In particular, it is the object of the present invention to provide a device capable of automatically analyzing a spool of thread, recognizing the physical nature defects thereof, such as "broken burrs", "ties" or other morphological defects, enabling the analysis of the spools to be constantly effective.

Such an object is achieved by a device for automatically checking the quality of a spool of thread for fabrics according to claim 1, by a relative machine according to claim 11, by a relative method for automatically checking the quality of a spool of thread according to claim 14. The dependent claims describe preferred embodiments of the invention.

The features and advantages of the device according to the present invention will become apparent from the following description, given by way of non-limiting example in accordance with the accompanying drawings, in which:
- Figure 1 shows an axonometric view of a thread spool 1;
- Figure 2 shows a front view of a lateral surface 4 of a thread spool 1, in which a series of defects A, B, C are shown;
- Figure 3 shows an axonometric view from above of a device 100 for automatically checking the quality of a spool of thread for fabrics, in an embodiment;
- Figure 4 shows an axonometric view from the bottom of the device in Figure 3;
- Figure 5 shows a sectional view of the device in Figure 3, in a configuration for analyzing the quality of the spool of thread;
- Figure 6 shows a front view of the device in Figure 3;
- Figure 7 shows a rear view of the device in Figure 3;
- Figure 8 shows an axonometric view of a light of the device 100 for automatically checking the quality of a spool of thread;
- Figure 9 shows a sectional view of the light in Figure 8;
- Figure 10 shows an axonometric view from above of a device 100 for automatically checking the quality of a spool of thread for fabrics, in a further embodiment;
- Figure 11 shows a sectional view of the device in Figure 10;

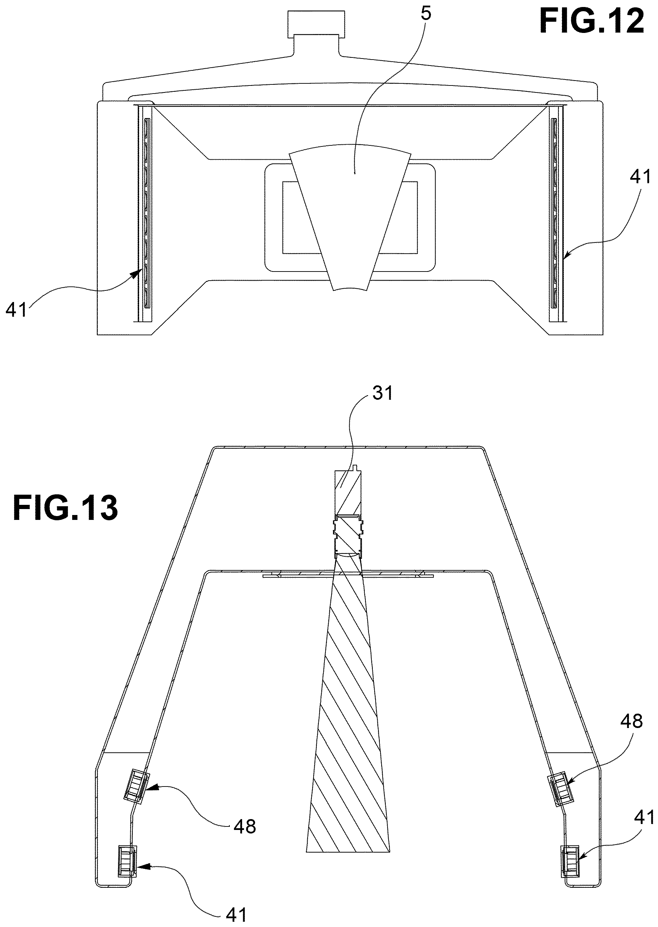

- Figure 12 shows a front view of the device in Figure 10;
- Figure 13 shows a sectional view from above of the device in Figure 10;
- Figure 14 shows an axonometric view from above of a machine 200, in an embodiment, provided with a device 100 for automatically checking the quality of a spool of thread for fabrics as in Figure 3;
- Figure 15 shows a front sectional view of the machine in Figure 14, in which the device 100 is in a configuration for replacing the spool of thread;
- Figure 16 shows a lateral sectional view of the machine in Figure 14.
- Figure 17 shows an axonometric view from above of a device 100 for automatically checking the quality of a spool of thread for fabrics, in a further embodiment;
- Figure 18 shows a sectional view of the device in Figure 17;
- Figure 19 shows an axonometric view from above of a machine 300, in a further embodiment, provided with a plurality of devices 100 for automatically checking the quality of a spool of thread for fabrics as in Figure 17;
- Figure 20 shows a sectional view of the machine in Figure 19 during the step of loading the spools, for example from a trolley;

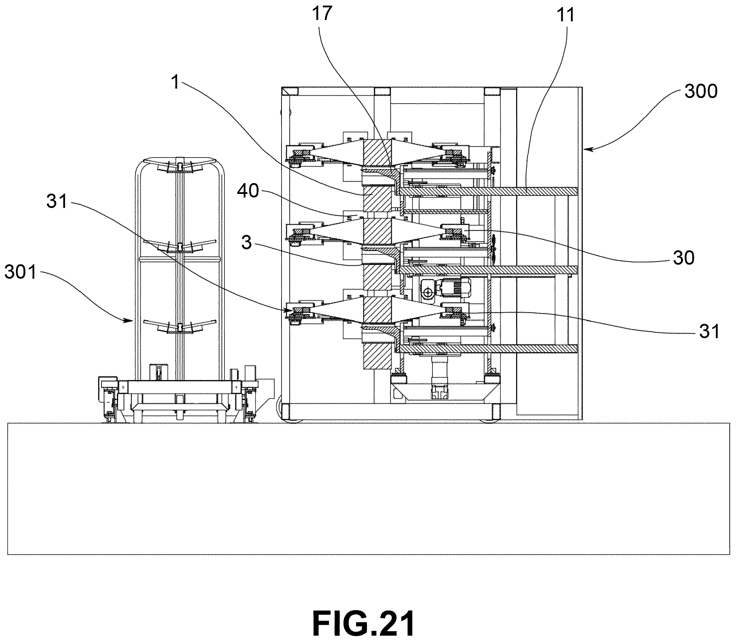

- Figure 21 shows a sectional view of the machine in Figure 19 with the spools loaded and being analyzed;
- Figure 22 shows a front view of the machine in Figure 19 with the spools loaded.

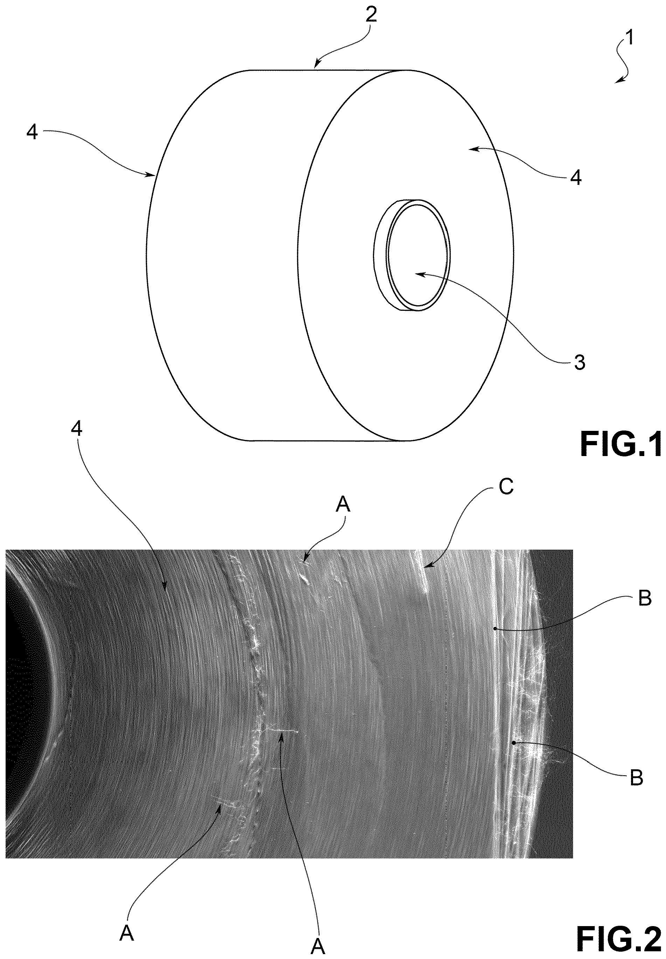

With reference to the above Figures, in particular to Figures 1 and 2, some definitions useful for understanding the invention are given below.

Tube 3: cylinder onto which the thread for forming a thread spool 1 is wound; it is often made of plastic or cardboard material.

Thread spool 1: it is obtained by winding a thread, accompanying it over a tube 3, maintaining a cylindrical symmetry. For mechanical-textile reasons, the thread spool 1 may have different profiles according to the physical-chemical nature of the thread collected.

External surface 2 of the thread spool 1: it corresponds to the front face of the spool of thread, i.e., the face at which the winding of the thread on the tube 3 occurs.

Lateral or Tapered Surfaces 4 of the thread spool 1: they correspond to the sides of the spool of thread, and represent the surfaces of interest of the system according to the present invention.

Defects present on the Lateral or Tapered surfaces 4 of the thread spool 1, and of interest for the system according to the present invention:
"Broken Burr" defect A: it is a thread-like body which protrudes from the lateral surface of the spool of thread.
"Tie" defect B: it is a portion of thread of the spool which does not respect the correct positioning. The portion of thread protrudes and then re-enters from the lateral surface of the spool of thread, due to an incorrect positioning of the thread during the step of forming the spool of thread.

Other morphological defects C: a perfect spool of thread shall have lateral surfaces on which other shapes are not distinguishable except the circular thread winding weft. Anything that differs, i.e., which may be distinguished from such a circular winding weft, is considered a defect and must be recognized.

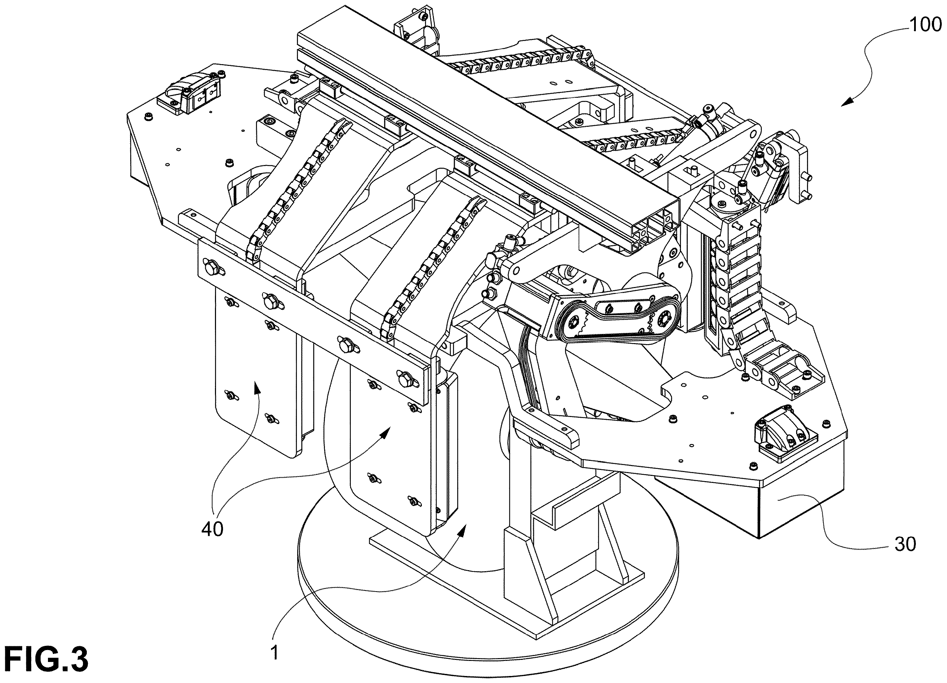

With reference to the accompanying drawings, and in particular to Figures 3, 10 and 17, reference numeral 100 overall indicates a device for automatically checking the quality of a spool of thread for fabrics.

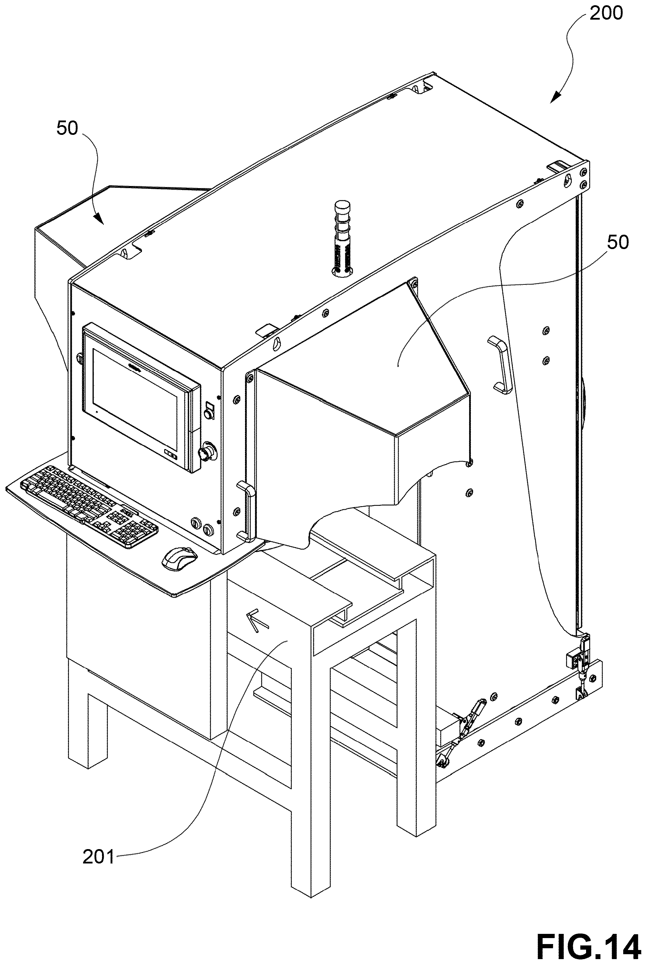

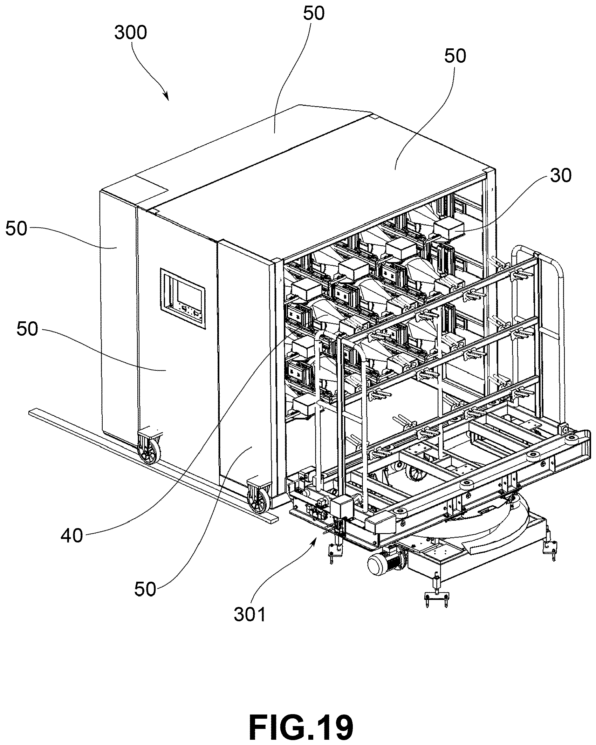

The device 100 for automatically checking the quality of a thread spool 1 according to the present invention may be an integral part of a machine 200, 300 for automatically checking the quality of a thread spool 1, or it may be applied (as an accessory) to a pre-existing machine 200 for automatically checking the quality of a thread spool 1. An example of machine 200 for automatically checking the quality of a thread spool 1 is shown in Figure 14. A further example of machine 300 for the multiple automatic check of the quality of a plurality of spools of thread 1 is shown in Figure 19.

The device 100 for automatically checking the quality of a thread spool 1, or the machine 200, 300 integrating or mounting the device 100, or the plate 101 on which the spool is loaded, comprises at least one frame 11 which supports an arm 17 onto which it is possible to place the thread spool 1 to be analyzed.

The device 100 comprises at least one vision system 30 and at least one dedicated lighting system 40.

In the embodiment in which the device 100 comprises a vision system 30 and a corresponding dedicated lighting system 40, it is possible to analyze only a lateral surface 4 of the spool of thread.

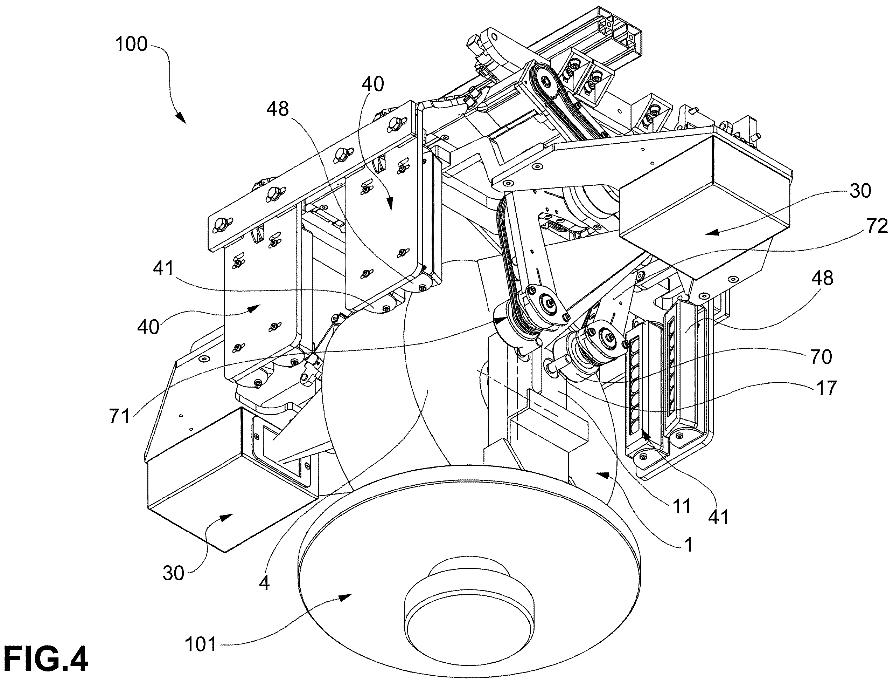

In the embodiment in Figures 4, 10 and 17 in which the device 100 comprises a pair of vision systems 30 and a pair of corresponding dedicated lighting systems 40, it is possible to simultaneously analyze both lateral surfaces 4 of the spool of thread.

The vision system 30 analyzes an analysis area 5, defined as a portion of the lateral surface 4 of the thread spool 1. Preferably, the analysis area 5 corresponds to a segment of the lateral surface 4, and extends from the tube 3 for the entire vertical development of the thread spool 1.

The vision system 30 comprises a digital camera 31 connected to a computer on which a dedicated analysis software is loaded.

The camera 31 is therefore arranged frontally in relation to the lateral surface 4 of the thread spool 1 to be analyzed.

The lighting system 40 is made so as to emphasize the presence of the above defects, therefore the "Broken Burr" defects A, "tie" defects B and other morphological defects C. It is in fact the object of the lighting system 40 to illuminate with direct light the parts which protrude from the lateral surface 4 and which are therefore defects, and to instead illuminate, mainly with diffused light, the lateral surface 4 itself.

The lighting system 40 is therefore made so as to provide an illumination which substantially hits the lateral surface 4 of the spool of thread sidewise, so as to highlight the defects thereof.

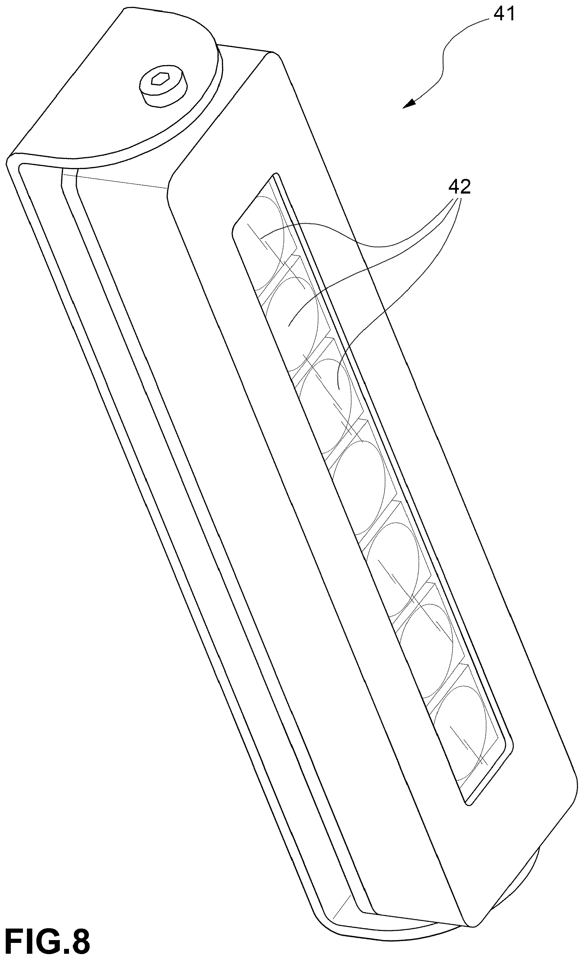

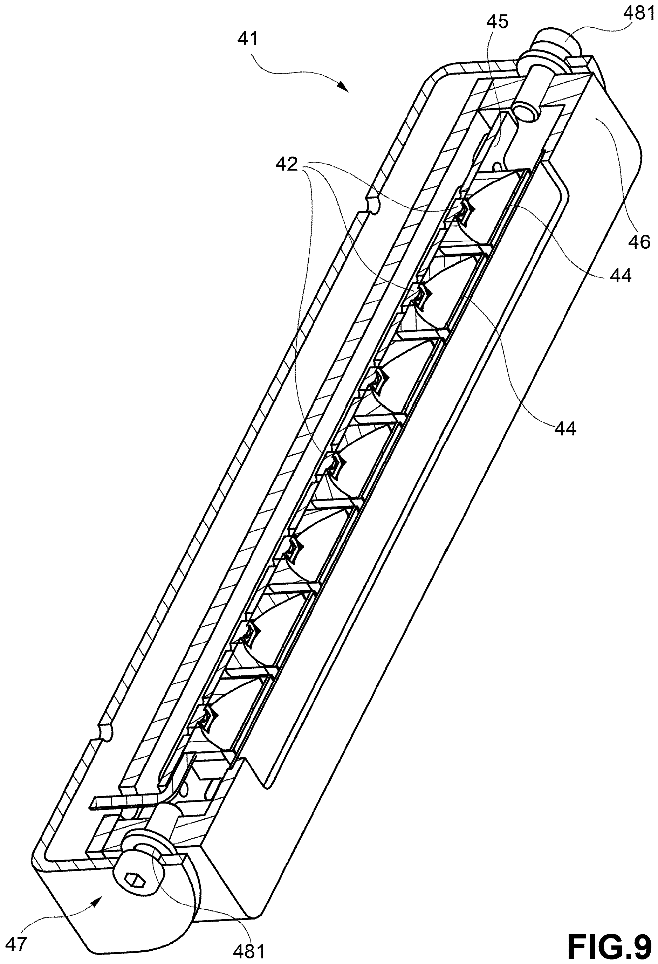

The lighting system 40 comprises at least one pair of lights 41, shown in detail in Figures 8 and 9.

The lights 41 are therefore arranged substantially transversely in relation to the lateral surface 4 of the thread spool 1 to be analyzed, and project thereon a light beam which substantially hits the lateral surface 4 itself sidewise.

Each light 41 preferably comprises a series of light sources 42, preferably a series of high-intensity LEDs. Preferably, the light sources 42 are arranged in line.

It should be noted that the number of light sources 42 contained in the light 41 depends on the size of the analysis area 5 of the vision system 30: the entire height of the analysis area 5 shall be illuminated.

Preferably, each light source 42, i.e., each LED, is provided with a cylindrical lens 44 that conveys the light beam towards the analysis area 5.

The light 41 preferably comprises a light-polarization filter.

The light 41 preferably comprises a high-efficiency heat diffusion system. Preferably, the series of light sources 42 are fixed on a metal plate 45 positioned in direct contact with the protective metal casing 46.

Preferably, the light 41 is directable. The light 41, in fact, comprises a base 47 which may be connected to the device 100, and the protective casing 46 is fixed in a rotatable manner (for example, by means of a pair of pins 48) in relation to such a base 47.

The lighting system 40 comprises two lights 41, positioned on the opposite sides of the lateral surface 4 of the thread spool 1.

Preferably, the two lights 41 are positioned opposite to each other.

Preferably, the two lights 41 are side lights, positioned at an angle between 0° and 15° in relation to the lateral surface 4 of the thread spool 1.

It should be noted that the angle of 0° degrees corresponds to the situation of parallelism between the lateral surface 4 of the thread spool 1 and the light beam emitted by the light 41.

In an embodiment, the lighting system 40 comprises two lights 41, positioned on opposite sides of the lateral surface 4 of the thread spool 1, positioned at an angle of 0° and 15° in relation to the lateral surface 4 of the thread spool 1.

The lighting system 40 further comprises two additional lights 48, positioned on the opposite sides of the lateral surface 4 of the thread spool 1.

Preferably, the two lights 48 are positioned opposite to each other.

Preferably, the two lights 48 are angled lights, positioned at an angle between 10° and 60° in relation to the lateral surface 4 of the thread spool 1.

The further, so-called, angled lights 48 are of the same type as the side lights 41, but they are arranged at a more frontal angle and distance. The purpose is to be capable of analyzing even very dark spools of thread and looking for defects other than morphological ones, for example color defects.

Preferably, the device 100, comprises a shield 50 suitable to cover at least partly the vision system 30 and/or the lighting system 40 and/or the analysis area 5 of the lateral surface 4 of the thread spool 1. Advantageously, in fact, the thread spool 1 is analyzed inside a dark chamber, obtained by means of the shield 50, which protects it from other unwanted light sources.

Preferably, the camera 31 is protected by a container 30 and by an optical glass placed between the lens and the spool. The faces of the glass and the paste must be processed with very high quality.

It should be noted that the exposure time of each photographic shot made by the vision system 30 is calculated for each thread spool 1 analyzed, so as to mediate the shade of gray of the obtained image.

Preferably, at least the camera 31 of the vision system 30 is movable, i.e., it may be moved away from the arm 17 on which the thread spool 1 is positioned so as to create space to facilitate the replacement of the spools.

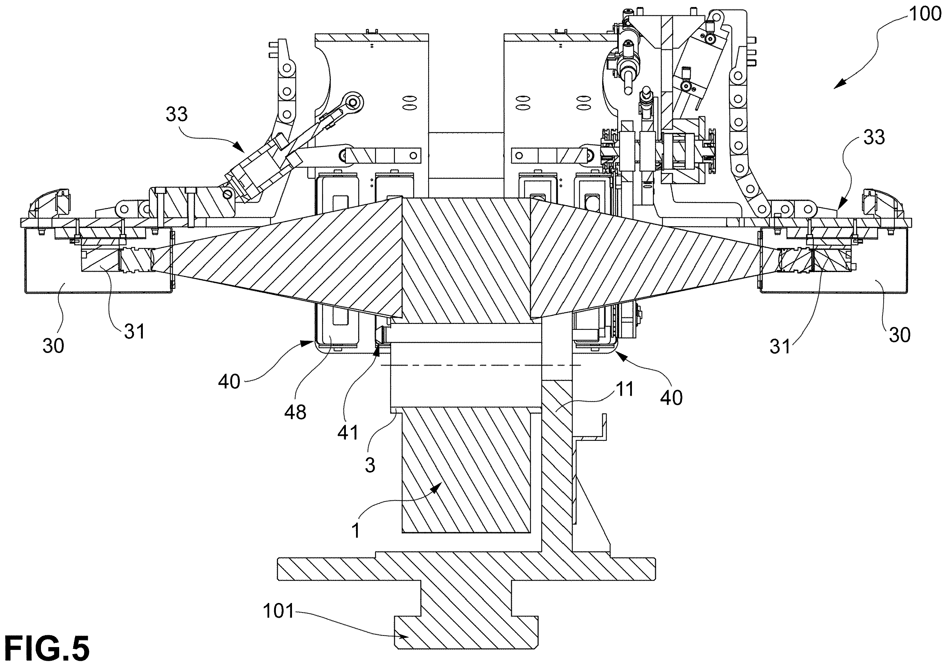

In the example in Figure 5, the camera 31 is fixed to a moving arm 33 which allows it to be raised, when it is necessary to replace the spool of thread, and to be lowered back into the operating position, when it is necessary to analyze the spool of thread.

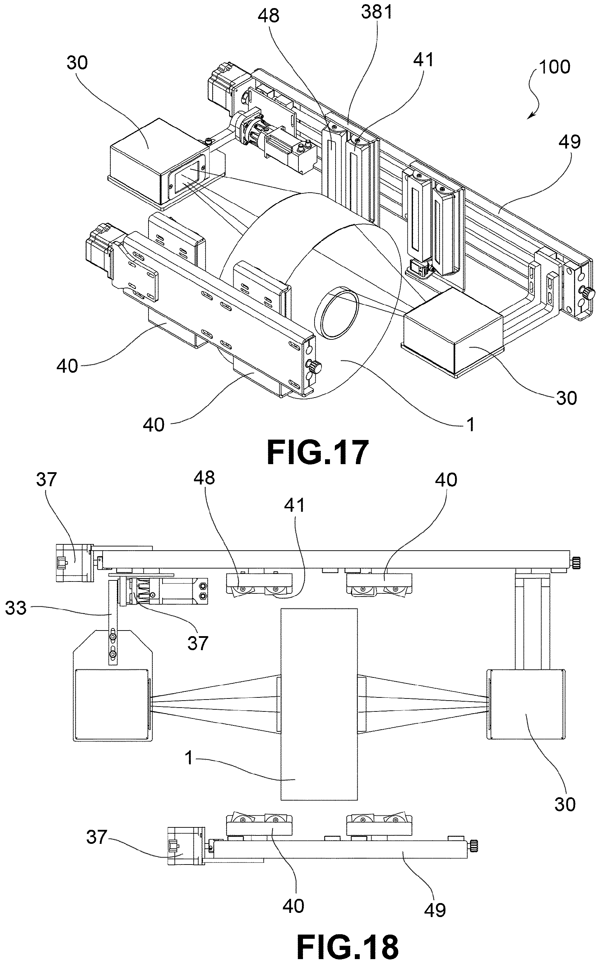

In the example in Figure 17, the camera 31 is fixed to a moving arm 33 which allows it to be moved longitudinally along the axis of the spool, towards and away from it, when it is necessary to replace the spool of thread.

Preferably, both the vision system 30 and the lighting system 40 are movable, i.e., they may be moved away from the arm 17 on which the thread spool 1 is positioned, so as to create a space to facilitate the replacement of the spools or to adjust the vision system and the lighting system for a correct analysis of the spool.

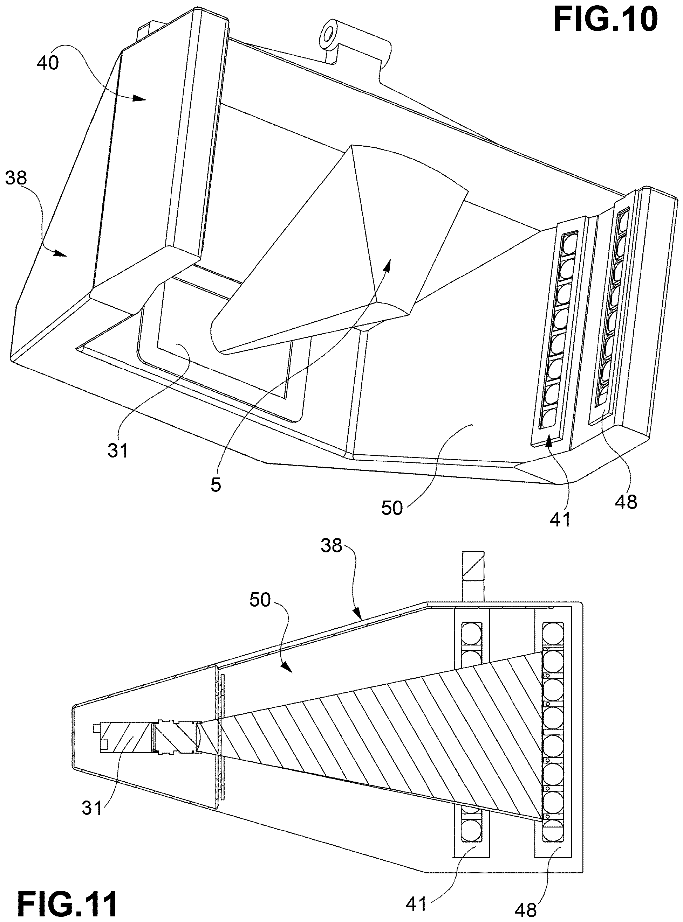

In the example in Figure 10, both the camera 31 and the lights 41, 48 are fixed on a movable frame 38 which allows it to be raised, when it is necessary to replace the spool of thread, and to be lowered back into the operating position, when it is necessary to analyze the spool of thread. In such an embodiment, the movable frame 38 also comprises a shield 50 suitable to cover at least partly the vision system 30 and/or the lighting system 40 and/or the analysis area 5 of the lateral surface 4 of the thread spool 1.

In the example in Figure 17, both the camera 31 and the lights 41,48 are slidable along a track 49 which allows it to be moved along the axis of the spool, towards and away from the spool of thread, when it is necessary to replace it. In such an embodiment, the camera 31 is fixed to an arm 33 and the lights 41, 48 are fixed to a trolley 38, both the arm 33 and the trolley 38 being slidable along the track. Preferably, the arm 33 and the trolley 38 are moved by a relative motor 37.

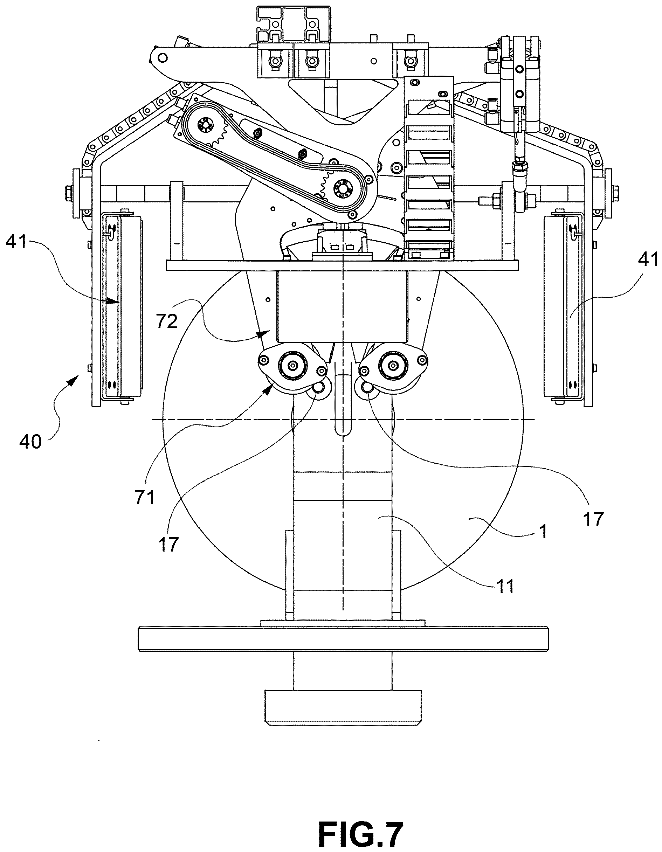

Preferably, the device 100 further comprises an automatic system for moving the thread spool 1, shown, for example, in Figure 4. The moving system 70 comprises at least one roller 71 adapted to rotate the support pin 17 on which is the thread spool 1 is arranged. In the example in Figure 7, in which the spool is positioned on a pair of support pins 17, the moving system 70 comprises a pair of rollers 71 each adapted to rotate a relative support pin 17.

Preferably, the rollers 71 are movable by means of suitable moving arms 72.

An example of machine 200 for automatically checking the quality of a thread spool 1 is shown in Figure 14.

The machine 200 comprises a frame 11 which supports an arm 17 (or pin 17) on which it is possible to place a thread spool 1 to be analyzed.

The machine 200 for automatically checking the quality of a spool of thread, in accordance with the present invention, comprises:
- a frame 11 provided with an arm 17 onto which a spool of thread to be analyzed may be placed;
- a system for moving the spool of thread to be analyzed;
- a computer onto which analysis software is loaded;
- a device 100 for automatically checking the quality of the spool of thread to be analyzed, connected to the system for moving the spool and to the computer.

Preferably, the machine 200 also comprises a shield 50 suitable to cover at least partly the vision system 30 and/or the lighting system 40 and/or the analysis area 5 of the lateral surface 4 of the thread spool 1.

Preferably, the machine 200 includes a loading system of the "plate" type, as shown in Figures 4 and 14.

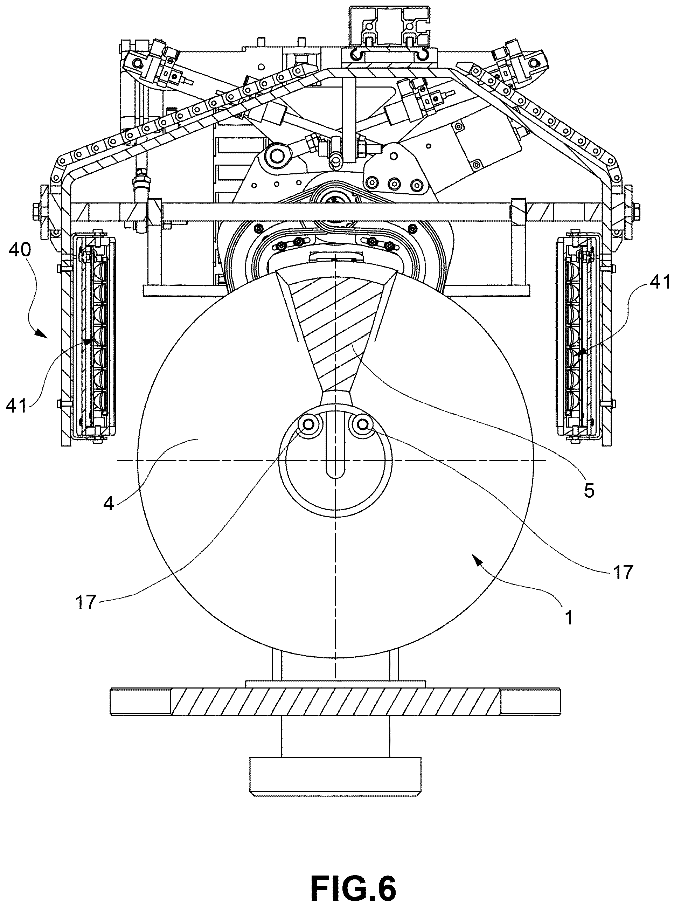

The plate 101 is a mechanical device which supports the spool on two pins 17 (also shown in Figure 6) and which may be conveyed along a conveyor belt 201 (partially shown in Figure 14).

The plate 101 comprises a frame 11 which supports a pair of arms 17 on which the thread spool 1 to be analyzed travels.

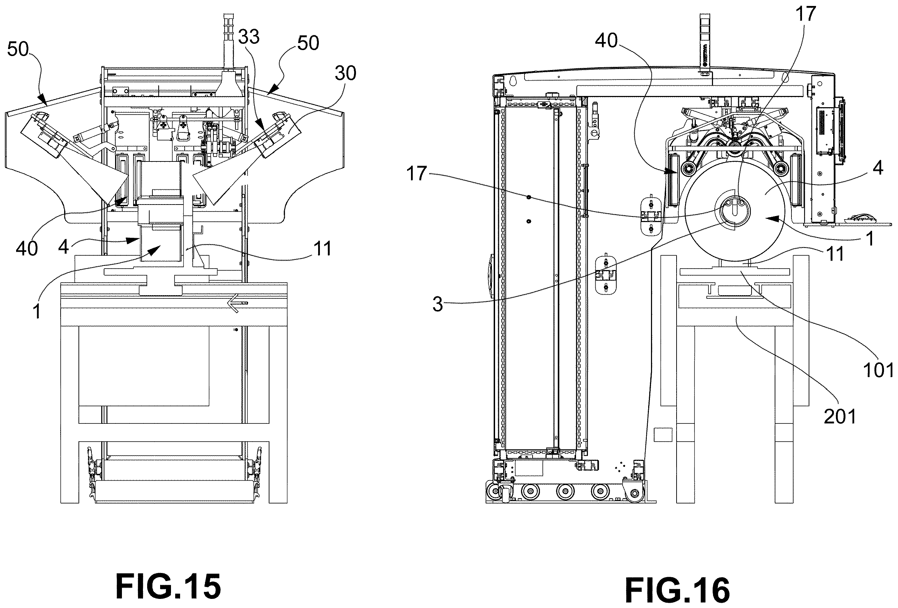

The plate 101 is arranged on the conveyor belt so that the relative tube 3 is positioned horizontally, transversely in relation to the conveying plane defined by the conveyor belt 201 (as shown in Figure 16).

The conveyor belt 201 moves the plate 101 up to a mechanical stop positioned inside the analysis chamber of the machine 200. Once the plate 101 has reached the destination thereof, the belt 201 is blocked.

The rollers 71 (for example, in the form of rubber wheels) are therefore lowered until they come into contact with and press the support pins 17 and are kept in contact by pressure. When the rollers 71 begin to rotate synchronously, they transmit, by friction, the motion to the tube 3 and therefore to the spool 1 which also begins to rotate.

The vision systems 30 descend until each is positioned facing a lateral face 4 of the thread spool 1, so as to be capable of framing the whole analysis area 5.

When the device 100 provides for it (such as, in Figure 10), also the lighting systems 40 descend until they are positioned each on one side of the lateral face 4 of the thread spool 1, so as to correctly illuminate the analysis area 5.

The vision systems 30 and the lighting systems 40 are adjusted in position according to the size of the spool.

While the thread spool 1 rotates, a photograph is taken of the analysis area 5 of each lateral face 4. Preferably, the photographs of the two lateral faces 4 of the thread spool 1 are taken in a staggered manner, first one and then the other, to prevent the lighting systems 40 of each lateral face 4 from interfering with each other.

Once a complete rotation (hence 360 degrees) of the thread spool 1 has been completed, and, therefore, once the photographs of the entire circumference of both lateral faces 4 of the spool of thread have been taken, the vision systems 30 (and possibly the lighting systems 40, depending on the type of device 100) are raised again.

When the path is free, the conveyor belt is moved to allow the exit of the plate 101 on which the spool of thread just analyzed is arranged, and to allow the entry of the next plate on which a spool of thread still to be analyzed is arranged.

A further example of machine 300 for the multiple automatic check of the quality of a plurality of spools of thread 1 is shown in Figure 19.

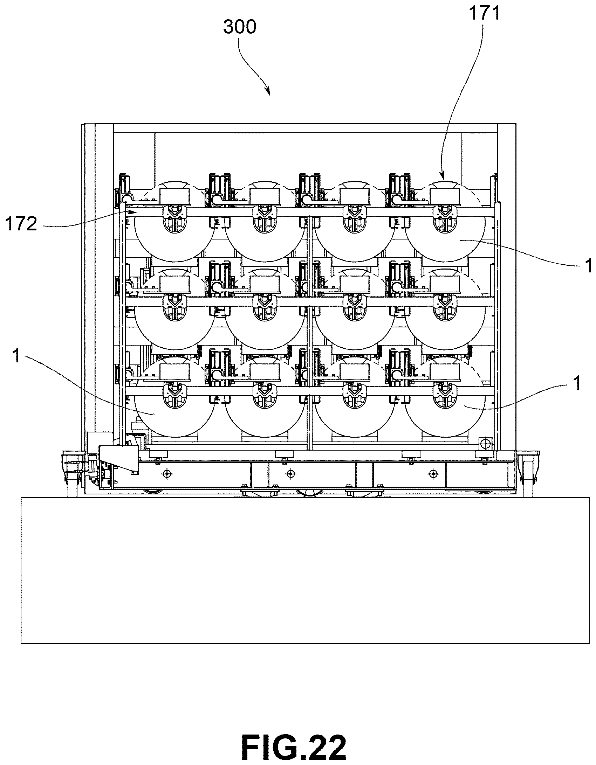

The machine 300 comprises a frame 11 which supports a plurality of arms 17 (or pins 17) on each of which it is possible to place a thread spool 1 to be analyzed. The machine 300 therefore allows the multiple automatic check of a plurality of spools of thread 1. In the example in Figure 22, precisely given by way of non-limiting example, the machine 300 is capable of automatically checking 12 spools of threads simultaneously.

The machine 300 for the multiple automatic check of the quality of a spool of thread, in accordance with the present invention, comprises:
- a frame 11 provided with at least one arm 17, preferably a plurality of arms 17, on each of which it is possible to place a spool of thread to be analyzed;
- a plurality of moving systems, each connected to a spool of thread to be analyzed;
- at least one computer onto which analysis software is loaded;
- a plurality of devices 100, each intended for automatically checking the quality of a spool of thread, connected to the respective spool moving system, and to at least one computer.

The frame 11 of the machine 300 comprises at least one arm 17 on which a thread spool 1 may be loaded. Preferably, the frame 11 comprises a plurality of arms 17 arranged to form at least one column 171 and/or at least one horizontal row 172 on which the spools of thread may be positioned.

Preferably, the frame 11 comprises a plurality of columns 171 and/or horizontal rows 172.

Preferably, the machine 300 also comprises a shield 50 suitable to cover at least partly the vision systems 30 and/or the lighting systems 40 and/or the analysis areas 5 of the spools of thread 1.

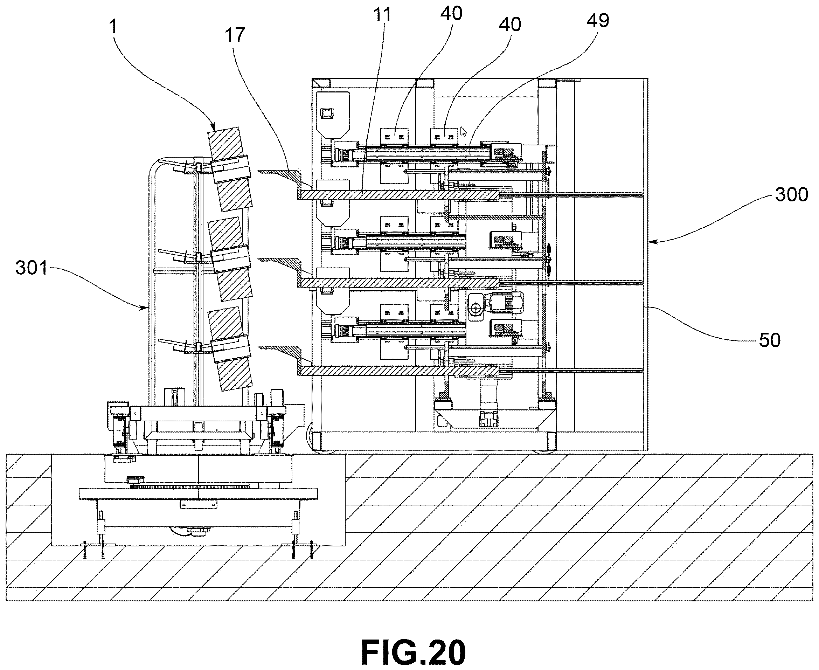

Preferably, the machine 300 includes a loading system of the "trolley" type, as shown in Figures 17 and 20.

The trolley 301, clearly visible in Figure 19, supports at least one thread spool 1, preferably a plurality of columns of spools of thread and/or a plurality of horizontal rows of spools of thread.

The trolley 301, also called module, is conveyed along the moving line up to the machine 300.

The spools are loaded, from the trolley 301 itself, inside the analysis chamber of the machine 300. In particular, the spools of thread are loaded each on a relative arm 17.

The vision systems 30 descend until each is positioned facing a lateral face 4 of the thread spool 1, so as to be capable of framing the whole analysis area 5.

When the device 100 provides for it (such as, in Figure 18), also the lighting systems 40 descend until they are positioned each on one side of the lateral face 4 of the thread spool 1, so as to correctly illuminate the analysis area 5.

The vision systems 30 and the lighting systems 40 are adjusted in position according to the size of the spool.

While the thread spool 1 rotates, a photograph is taken of the analysis area 5 of each lateral face 4. Preferably, the photographs of the two lateral faces 4 of the thread spool 1 are taken in a staggered manner, first one and then the other, to prevent the lighting systems 40 of each lateral face 4 from interfering with each other.

Once a complete rotation (hence 360 degrees) of the thread spool 1 has been completed, and, therefore, once the photographs of the entire circumference of both lateral faces 4 of the spool of thread have been taken, the vision systems 30 (and possibly the lighting systems 40, depending on the type of device 100) are raised again.

When the path is free, the trolley 301 unloads the spools of thread just analyzed and a new trolley 301 loads the spools of thread still to be analyzed.

The device 100 for automatically checking the quality of the spool of thread allows to analyze the spool by means of the lights 41, 48, an automation cycle and a dedicated software. The lights adequately illuminate (sidelight) the surface of the spool of thread, the automation cycle allows to obtain adequate images of the spool of thread and the software processing allows the extrapolation of defects.

It should be noted that the device 100 has been designed so as to fit an already present automation context.

The present invention also relates to a method for automatically checking the quality of a spool of thread for fabrics.

The method in accordance with the present invention comprises at least the following steps:
- providing at least one device 100 for automatically checking the quality of the spool of thread to be analyzed as described above;
- turning on the pair of lights 41, 48 of the device 100 to illuminate the analysis area 5 while taking a photograph of the spool of thread corresponding to the analysis area 5 by means of the camera 31 of the device 100;
- extrapolating the defects from the photograph of the spool of thread corresponding to the analysis area 5 by means of an extrapolation algorithm.

In particular, the extrapolation algorithm is run by a computer and involves at least the following steps:
- scanning the photograph of the spool of thread corresponding to the analysis area;
- extracting the four polarization planes of the photograph identified by the angles 0°, 45°, 90° and 135°;
- subtracting the image obtained from one polarization plane from an image obtained from another polarization plane, so as to highlight the differences in the morphology of the lateral surface of the spool;
- converting the weft of the image from circular to linear;
- identifying all of the sets of pixels that may potentially be categorized as defective;
- applying parameterizable filters to all of the sets of pixels, so as to rule out false negatives;
- checking, for example by means of the morphological expansion method, whether pixels near a set of pixels categorized as defective are themselves part of said set;
- if pixels near a set of pixels categorized as defective are themselves part of said set, combining said pixels near said set of pixels categorized as defective.

In particular, the step of identifying all of the sets of pixels that may be categorized as faulty comprises at least the sub-steps of:
- defining defect parameters suitable for characterizing the defects obtained from the extrapolation algorithm, for example size, shape, direction, luminosity, microcontrasts, and anisometry;
- taking from the pixels obtained from the step of converting the weft of the image from circular to linear the values taken by said defect parameters;
- comparing said values with the values of corresponding parameters of defects contained in a database of previously categorized defective images;
- categorizing the defect on the basis of the minor difference between the values of the defect parameters and the corresponding values of said previously categorized defects.

The automation cycle, the extrapolation of defects from the saved image and the recognition of the type of defect by means of the neural network will now be described in detail.

### AUTOMATION CYCLE:

1. The thread spool 1 already mounted to the support pins 17 is moved by the conveyor belt.
2. The system recognizes the presence of the thread spool 1 inside the analysis area, therefore it blocks it with a mechanical stop.
3. The rollers 71 are lowered onto the support pins 17 and are kept in contact by pressure. At the same time, the two cameras 31, which frame the two lateral faces 4 of the thread spool 1, are lowered.
4. A single motor rotates the rollers 71 and therefore the thread spool 1.
5. An encoder or a resolver allows to know the rotation angle performed. A photograph of the spool of thread is taken (corresponding to the analysis area 5) and a sector of the circular crown is thus analyzed, having the circumference of the tube as the smallest one, the circumference of the spool as the largest one, and the sides of the angle of 30°, which starts from the center of the spool, as ends thereof.
6. Each time a photograph is taken, the dedicated lights 41, 48 are controlled.
7. The two lateral faces 4 of the thread spool 1 are analyzed simultaneously; in order not to affect the lighting of one over the other, the photographs are taken in an asynchronous manner, for example with a delay of 15°.
8. Once the 360° of the spool have been completed, the rollers 71 and the cameras 31 are raised again; the spool of thread is therefore released to allow it to continue the travel thereof along the conveyor belt.

### EXTRAPOLATION OF DEFECTS FROM THE SAVED IMAGE

The method for using the device 100 includes the application in an ordered sequence of the following algorithms:
1. Polarization filter: the 4 polarization planes are extracted, and the cleaner image is then reconstructed.
2. Frequency filter: the image is converted into the frequency spectrum using the Fourier Transform algorithm. After applying a high pass filter, it is reverted from spectrum to geometric image.
3. Polarization difference filter: the luminance map of the image is constructed by performing successive subtractions of the 4 polarization planes. Thus, only what is not aligned with the general weft emerges.
4. Smoothing process.
5. The image is modeled so that the trend of the weft changes from circular to linear. Thus, off-weft defects emerge.
6. Numerical and geometric filters: other suitably set mathematical filters are applied, for example, the brightness of the pixels found and the minimum size in pixels.
7. Of all the groups of pixels recognized as defective, a single defect is reconstructed by composing all the pixels which are close to each other and which maintain the permitted geometries.

### RECOGNITION OF THE TYPE OF DEFECT BY MEANS OF THE NEURAL NETWORK

The vision system categorizes the defects following a logic of the Neural Network type.

A Database of images already labeled by an operator is built. The order of magnitude of this collection must be at least of a few hundred images. Each image provides plenty of information, for example, the size of the defect, the shape, the direction, the brightness.

Once a defect has been detected, the system searches for the closest match, by comparing all the information, and classifies it.

Thereby, the system automatically discriminates, for example, a "broken burr" defect from a "tie" defect. The user may therefore weigh each defect to obtain an overall evaluation of the analyzed spool.

The present invention also relates to a computer programmed to implement the method for automatically checking the quality of a spool of thread for fabrics as described above.

The present invention also relates to a computer program comprising portions of code which, when the program is run on a computer, implement the method for automatically checking the quality of a spool of thread for fabrics as described above.

Innovatively, a device 100 for automatically checking the quality of a thread spool 1, and the related automatic checking method, allows the analysis carried out on the spool to be objective, and therefore to make the assessment and the classification objective and error-free.

Advantageously, therefore, the device and the method described herein allow to completely automate the analysis and classification of the spools, with the dual purpose of ensuring absolute objectivity in the assessment and reducing the cost of complaints and consequent penalties. Such an aspect is very important, especially for high-end product categories.

It is apparent that those skilled in the art may make changes to the subject described above, all contained within the scope of protection as defined by the following claims.

## Claims

1. Device (100) for automatically checking the quality of a spool of thread for fabrics, comprising:
- at least one vision system (30) comprising a camera (31) the frame of which defines an analysis area (5), said camera (31) being connectable to a system for moving a spool of thread to be analyzed and to a computer onto which analysis software is loaded; and
- at least one lighting system (40);
**characterized in that** the at least one lighting system (40) comprises:
-- at least one pair of lights (41) arranged facing one another and transversely in relation to the analysis area (5), each light (41) comprising a plurality of light sources (42) arranged in line, each light source (42) suitable to provide a raking light to the analysis area (5) of the camera (31), and
-- an additional pair of lights (48) arranged facing one another and transversely in relation to the analysis area (5), each light (48) comprising a plurality of light sources (42) arranged in line, each light source (42) suitable to provide an angled illumination to the analysis area (5).

2. Device according to claim 1, wherein the two lights (41) are positioned at an angle of between 0° and 15° in relation to the analysis area (5), wherein the angle of 0° corresponds to a parallelism between the illumination provided by the light source (42) and the analysis area (5) of the camera (32).

3. Device according to claim 1 or 2, wherein the two additional lights (48) are positioned at an angle of between 10° and 60° in relation to the analysis area (5).

4. Device according to any of the previous claims, wherein the light source (42) is a high-intensity LED.

5. Device according to any of the previous claims, wherein each light source (42) is provided with a cylindrical lens (44) that conveys the light beam towards the analysis area (5).

6. Device according to any of the preceding claims, wherein the light (41, 48) preferably comprises a light-polarization filter.

7. Device according to any of the preceding claims, wherein the light (41, 48) comprises a heat diffusion system in the form of a metal plate (45) onto which the light sources (42) are fixed, said metal plate (45) being fixed to a metal protective casing (46) that protects the light (41, 48).

8. Device according to any of the preceding claims, wherein the light (41, 48) may be rotated to enable the orientation of the light source (42) in relation to the analysis area (5).

9. Device according to any of the preceding claims, comprising a shield (50) suitable to cover at least partly the vision system (30) and/or lighting system (40) and/or the analysis area (5).

10. Device according to any of the preceding claims, comprising a pair of vision systems (30) and a pair of corresponding lighting systems (40), wherein the two cameras (31) are arranged facing one another.

11. Machine (200, 300) for automatically checking the quality of a spool of thread, comprising:
- a frame (11) provided with at least one arm (17) onto which may be placed a spool of thread to be analyzed;
- at least one system for moving the spool of thread to be analyzed;
- a computer onto which analysis software is loaded;
- at least one device (100) for automatically checking the quality of the spool of thread to be analyzed, according to any of the preceding claims, said device (100) being connected to the system for moving the spool of thread to be analyzed and to the computer.

12. Machine (200,300) according to claim 11, wherein the vision system (30) and/or the lighting system (40) may be moved away and/or towards the arm (17).

13. Machine (300) according to claim 11 or 12, wherein the frame (11) comprises a plurality of arms (17) arranged to form at least one column (171) and/or at least one horizontal row (172) on which the spools of thread may be positioned.

14. Method for automatically checking the quality of a spool of thread for fabrics, comprising at least the following steps:
- provide at least one device (100) for automatically checking the quality of the spool of thread to be analyzed according to any of claims 1 to 11;
- turn on the pair of lights (41, 48) of the device (100) to illuminate the analysis area (5) and at the same time take a photograph of the spool of thread corresponding to the analysis area (5) by means of the camera (31) of the device (100);
- extrapolate the defects from the photograph of the spool of thread corresponding to the analysis area (5) by means of an extrapolation algorithm.

15. Method according to claim 14, wherein the extrapolation algorithm is performed by a computer and includes at least the following steps:
- scan the photograph of the spool of thread corresponding to the analysis area;
- extract the four polarization planes of the photograph identified by the angles 0°, 45°, 90° and 135°;
- subtract the image obtained from one polarization plane from an image obtained from another polarization plane, so as to highlight the differences in the morphology of the lateral surface of the spool;
- convert the weft of the image from circular to linear;
- identify all of the sets of pixels that may potentially be categorized as defective;
- apply parameterizable filters to all of the sets of pixels, so as to rule out false negatives;
- check, for example by means of the morphological expansion method, whether pixels near a set of pixels categorized as defective are themselves part of said set;
- if pixels near a set of pixels categorized as defective are themselves part of said set, combine said pixels near said set of pixels categorized as defective.

16. Method according to claim 15, wherein said step of identifying all of the sets of pixels that may be categorized as faulty comprises at least the sub-steps of:
- defining defect parameters suitable for characterizing the defects obtained from the extrapolation algorithm, for example size, shape, direction, luminosity, microcontrasts and anisometry;
- take from the pixels obtained from the step of converting the weft of the image from circular to linear the values assumed by said defect parameters;
- compare said values with the values of corresponding parameters of defects contained in a database of previously categorized defective images;
- categorize the defect on the basis of the minor difference between the values of the defect parameters and the corresponding values of said previously categorized defects.

## Patentansprüche

1. Vorrichtung (100) zum automatischen Überprüfen der Qualität einer Fadenspule bzw. Garnrolle für Stoffe, umfassend:
- zumindest ein Sichtsystem (30), das eine Kamera (31) umfasst, deren Rahmen einen Analysebereich (5) definiert, wobei die Kamera (31) mit einem System zum Bewegen einer zu analysierenden Fadenspule bzw. Garnrolle und mit einem Computer verbindbar ist, auf den Analysesoftware geladen ist; und
- zumindest ein Beleuchtungssystem (40);
**dadurch gekennzeichnet, dass** das zumindest eine Beleuchtungssystem (40) umfasst:
- zumindest ein Paar von Lichtern bzw. Leuchten (41), die einander zugewandt und quer in Bezug auf den Analysebereich (5) angeordnet sind, wobei jede Leuchte (41) eine Mehrzahl von Lichtquellen (42) umfasst, die in Reihe angeordnet sind, wobei jede Lichtquelle (42) geeignet ist, dem Analysebereich (5) der Kamera (31) ein Streiflicht bzw. Seitenlicht bereitzustellen, und
- ein zusätzliches Paar von Lichtern bzw. Leuchten (48), die einander zugewandt und quer in Bezug auf den Analysebereich (5) angeordnet sind, wobei jede Leuchte (48) eine Mehrzahl von Lichtquellen (42) umfasst, die in einer Reihe angeordnet sind, wobei jede Lichtquelle (42) geeignet ist, dem Analysebereich (5) eine winklige Beleuchtung bzw. Schrägbeleuchtung bereitzustellen.

2. Vorrichtung nach Anspruch 1, wobei die beiden Leuchten (41) in einem Winkel zwischen 0° und 15° in Bezug auf den Analysebereich (5) positioniert sind, wobei der Winkel von 0° einer Parallelität zwischen der durch die Lichtquelle (42) bereitgestellten Beleuchtung und dem Analysebereich (5) der Kamera (32) entspricht.

3. Vorrichtung nach Anspruch 1 oder 2, wobei die beiden Zusatzleuchten (48) in einem Winkel zwischen 10° und 60° in Bezug auf den Analysebereich (5) positioniert sind.

4. Vorrichtung nach einem der vorhergehenden Ansprüche, wobei die Lichtquelle (42) eine Hochleistungs-LED ist.

5. Vorrichtung nach einem der vorhergehenden Ansprüche, wobei jede Lichtquelle (42) mit einer Zylinderlinse (44) versehen ist, die den Lichtstrahl zu dem Analysebereich (5) hin leitet.

6. Vorrichtung nach einem der vorhergehenden Ansprüche, wobei die Leuchte (41, 48) vorzugsweise einen Lichtpolarisationsfilter umfasst.

7. Vorrichtung nach einem der vorhergehenden Ansprüche, wobei die Leuchte (41, 48) ein Wärmediffusionssystem in Form einer Metallplatte (45) umfasst, auf der die Lichtquellen (42) fixiert bzw. befestigt sind, wobei die Metallplatte (45) an einem metallischen Schutzgehäuse (46) fixiert bzw. befestigt ist, das die Leuchte (41, 48) schützt.

8. Vorrichtung nach einem der vorhergehenden Ansprüche, wobei die Leuchte (41, 48) gedreht werden kann, um die Ausrichtung der Lichtquelle (42) in Bezug auf den Analysebereich (5) zu ermöglichen.

9. Vorrichtung nach einem der vorhergehenden Ansprüche, umfassend eine Abschirmung (50), die geeignet ist, das Sichtsystem (30) und/oder das Beleuchtungssystem (40) und/oder den Analysebereich (5) zumindest teilweise abzudecken.

10. Vorrichtung nach einem der vorhergehenden Ansprüche, umfassend ein Paar Sichtsysteme (30) und ein Paar korrespondierende Beleuchtungssysteme (40), wobei die beiden Kameras (31) einander zugewandt angeordnet sind.

11. Maschine (200, 300) zum automatischen Überprüfen der Qualität einer Fadenspule bzw. Garnrolle, umfassend:
- einen Rahmen (11), der mit zumindest einem Arm (17) versehen ist, auf dem eine zu analysierende Fadenspule bzw. Garnrolle platziert werden kann;
- zumindest ein System zum Bewegen der zu analysierenden Garnrolle;
- einen Computer, auf den eine Analysesoftware geladen ist;
- zumindest eine Vorrichtung (100) zum automatischen Überprüfen der Qualität der zu analysierenden Garnrolle nach einem der vorhergehenden Ansprüche, wobei die Vorrichtung (100) mit dem System zum Bewegen der zu analysierenden Garnrolle und mit dem Computer verbunden ist.

12. Maschine (200,300) nach Anspruch 11, wobei das Sichtsystem (30) und/oder das Beleuchtungssystem (40) von dem Arm (17) weg und/oder zu diesem hin bewegt werden kann bzw. können.

13. Maschine (300) nach Anspruch 11 oder 12, wobei der Rahmen (11) eine Mehrzahl von Armen (17) umfasst, die so angeordnet sind, dass sie zumindest eine Säule (171) und/oder zumindest eine horizontale Reihe (172) bilden, auf der die Garnrollen positioniert werden können.

14. Verfahren zum automatischen Überprüfen der Qualität einer Fadenspule bzw. Garnrolle für Stoffe, umfassend zumindest die folgenden Schritte:
- Bereitstellen zumindest einer Vorrichtung (100) zum automatischen Überprüfen der Qualität der zu analysierenden Garnrolle nach einem der Ansprüche 1 bis 11;
- Einschalten des Paars von Lichtern bzw. Leuchten (41, 48) der Vorrichtung (100), um den Analysebereich (5) zu beleuchten und gleichzeitig ein Foto der Garnrolle, die dem Analysebereich (5) entspricht, mittels der Kamera (31) der Vorrichtung (100) aufzunehmen;
- Extrapolieren der Defekte aus dem Foto der Garnrolle, die dem Analysebereich (5) entspricht, mittels eines Extrapolationsalgorithmus.

15. Verfahren nach Anspruch 14, wobei der Extrapolationsalgorithmus von einem Computer ausgeführt wird und zumindest die folgenden Schritte beinhaltet:
- Scannen des Fotos der Garnrolle, die dem Analysebereich entspricht;
- Extrahieren der vier Polarisationsebenen des Fotos, die durch die Winkel 0°, 45°, 90° und 135° identifiziert sind;
- Subtrahieren des von einer Polarisationsebene erhaltenen Bildes von einem von einer anderen Polarisationsebene erhaltenen Bild, um die Unterschiede in der Morphologie der lateralen Fläche bzw. Oberfläche der Rolle hervorzuheben;
- Konvertieren des Schusses des Bildes von kreisförmig zu linear;
- Identifizieren aller Pixelsätze, die möglicherweise als defekt kategorisiert werden können;
- Anwenden von parametrierbaren Filtern auf alle Pixelsätze, um falsch Negative auszuschließen;
- Überprüfen, beispielsweise mittels der morphologischen Expansionsmethode, ob Pixel in der Nähe eines Pixelsatzes, der als defekt kategorisiert wird, selbst Teil dieses Satzes sind;
- wenn Pixel in der Nähe eines als defekt kategorisierten Pixelsatzes selbst Teil dieses Satzes sind, Kombinieren der Pixel in der Nähe dieses als defekt kategorisierten Pixelsatzes.

16. Verfahren nach Anspruch 15, wobei der Schritt des Identifizierens aller Pixelsätze, die als fehlerhaft kategorisiert werden können, zumindest die Unterschritte umfasst:
- Definieren von Defektparametern, die zur Charakterisierung der aus dem Extrapolationsalgorithmus erhaltenen Defekte geeignet sind, beispielsweise Größe, Form, Richtung, Leuchtkraft, Mikrokontraste und Anisometrie;
- Nehmen aus den Pixeln, die aus dem Schritt des Konvertierens des Schusses des Bildes von kreisförmig zu linear erhalten werden, die durch die Defektparameter angenommenen Werte;
- Vergleichen dieser Werte mit den Werten entsprechender Defektparameter, die in einer Datenbank zuvor kategorisierter defekter Bilder enthalten sind;
- Kategorisieren des Defekts auf der Basis der geringfügigen Differenz zwischen den Werten der Defektparameter und den entsprechenden Werten der zuvor kategorisierten Defekte.

## Revendications

1. Dispositif (100) de vérification automatique de la qualité d'une bobine de fil pour tissus, comprenant :
- au moins un système de vision (30) comprenant une caméra (31) dont le cadre définit une zone d'analyse (5), ladite caméra (31) étant connectable à un système de déplacement d'une bobine de fil à analyser et à un ordinateur sur lequel est chargé un logiciel d'analyse ; et
- au moins un système d'éclairage (40) ;
**caractérisé en ce que** l'au moins un système d'éclairage (40) comprend :
-- au moins une paire de lampes (41) agencées face-à-face et transversalement par rapport à la zone d'analyse (5), chaque lampe (41) comprenant une pluralité de sources de lumière (42) agencées en ligne, chaque source de lumière (42) étant appropriée pour fournir un éclairage rasant sur la zone d'analyse (5) de la caméra (31), et
-- une paire supplémentaire de lampes (48) agencées face-à-face et transversalement par rapport à la zone d'analyse (5), chaque lampe (48) comprenant une pluralité de sources de lumière (42) agencées en ligne, chaque source de lumière (42) étant appropriée pour fournir un éclairage oblique sur la zone d'analyse (5).

2. Dispositif selon la revendication 1, dans lequel les deux lampes (41) sont positionnées à un angle compris entre 0° et 15° par rapport à la zone d'analyse (5), dans lequel l'angle de 0° correspond à un parallélisme entre l'éclairage fourni par la source de lumière (42) et la zone d'analyse (5) de la caméra (32).

3. Dispositif selon la revendication 1 ou 2, dans lequel les deux lampes supplémentaires (48) sont positionnées à un angle compris entre 10° et 60° par rapport à la zone d'analyse (5).

4. Dispositif selon l'une quelconque des revendications précédentes, dans lequel la source de lumière (42) est une DEL à haute intensité.

5. Dispositif selon l'une quelconque des revendications précédentes, dans lequel chaque source de lumière (42) est pourvue d'une lentille cylindrique (44) qui achemine le faisceau lumineux vers la zone d'analyse (5).

6. Dispositif selon l'une quelconque des revendications précédentes, dans lequel la lampe (41, 48) comprend de préférence un filtre de polarisation de lumière.

7. Dispositif selon l'une quelconque des revendications précédentes, dans lequel la lampe (41, 48) comprend un système de diffusion de chaleur sous la forme d'une plaque métallique (45) sur laquelle sont fixées les sources de lumière (42), ladite plaque métallique (45) étant fixée à un boîtier protecteur métallique (46) qui protège la lampe (41, 48).

8. Dispositif selon l'une quelconque des revendications précédentes, dans lequel la lampe (41, 48) peut être entraînée en rotation pour permettre l'orientation de la source de lumière (42) par rapport à la zone d'analyse (5).

9. Dispositif selon l'une quelconque des revendications précédentes, comprenant un écran (50) approprié pour recouvrir au moins une partie du système de vision (30) et/ou du système d'éclairage (40) et/ou de la zone d'analyse (5).

10. Dispositif selon l'une quelconque des revendications précédentes, comprenant une paire de systèmes de vision (30) et une paire de systèmes d'éclairage correspondants (40), dans lequel les deux caméras (31) sont agencées face-à-face.

11. Machine (200, 300) de vérification automatique de la qualité d'une bobine de fil, comprenant :
- un cadre (11) pourvu d'au moins un bras (17) sur lequel peut être placée une bobine de fil à analyser ;
- au moins un système de déplacement de la bobine de fil à analyser ;
- un ordinateur sur lequel est chargé un logiciel d'analyse ;
- au moins un dispositif (100) de vérification automatique de la qualité de la bobine de fil à analyser, selon l'une quelconque des revendications précédentes, ledit dispositif (100) étant connecté au système de déplacement de la bobine de fil à analyser et à l'ordinateur.

12. Machine (200, 300) selon la revendication 11, dans laquelle le système de vision (30) et/ou le système d'éclairage (40) peut/peuvent être déplacé(s) à distance et/ou en direction du bras (17).

13. Machine (300) selon la revendication 11 ou 12, dans laquelle le cadre (11) comprend une pluralité de bras (17) agencés pour former au moins une colonne (171) et/ou au moins une rangée horizontale (172) sur lesquelles les bobines de fil peuvent être positionnées.

14. Procédé de vérification automatique de la qualité d'une bobine de fil pour tissus, comprenant au moins les étapes suivantes :
- fournir au moins un dispositif (100) de vérification automatique de la qualité de la bobine de fil à analyser selon l'une quelconque des revendications 1 à 11 ;
- allumer la paire de lampes (41, 48) du dispositif (100) pour éclairer la zone d'analyse (5) et en même temps prendre un cliché de la bobine de fil correspondant à la zone d'analyse (5) au moyen de la caméra (31) du dispositif (100) ;
- extrapoler les défauts à partir du cliché de la bobine de fil correspondant à la zone d'analyse (5) au moyen d'un algorithme d'extrapolation.

15. Procédé selon la revendication 14, dans lequel l'algorithme d'extrapolation est exécuté par un ordinateur et comprend au moins les étapes suivantes :
- balayer le cliché de la bobine de fil correspondant à la zone d'analyse ;
- extraire les quatre plans de polarisation du cliché identifiés par les angles de 0°, 45°, 90° et 135° ;
- soustraire l'image obtenue à partir d'un plan de polarisation d'une image obtenue à partir d'un autre plan de polarisation, de façon à mettre en évidence les différences dans la morphologie de la surface latérale de la bobine ;
- convertir la trame de l'image de circulaire à linéaire ;
- identifier tous les ensembles de pixels qui peuvent potentiellement être classés comme défectueux ;
- appliquer des filtres paramétrables à la totalité des ensembles de pixels, de façon à écarter les faux négatifs ;
- vérifier, par exemple au moyen de la méthode de dilatation morphologique, si des pixels proches d'un ensemble de pixels classé comme défectueux font eux-mêmes partie dudit ensemble ;
- si des pixels proches d'un ensemble de pixels classé comme défectueux font eux-mêmes partie dudit ensemble, combiner lesdits pixels proches dudit ensemble de pixels classé comme défectueux.

16. Procédé selon la revendication 15, dans lequel ladite étape d'identification de la totalité des ensembles de pixels qui peuvent être classés comme défectueux comprend au moins les sous-étapes de :
- la définition de paramètres de défaut appropriés pour caractériser les défauts obtenus à partir de l'algorithme d'extrapolation, par exemple, une taille, une forme, une direction, une luminosité, des micro-contrastes et une inégalité dimensionnelle ;
- l'extraction, à partir des pixels obtenus à l'étape de conversion de la trame de l'image de circulaire à linéaire, des valeurs prises par lesdits paramètres de défaut ;
- la comparaison desdites valeurs aux valeurs de paramètres correspondants de défauts contenues dans une base de données d'images défectueuses précédemment classées ;
- le classement du défaut sur la base de la différence mineure entre les valeurs des paramètres de défaut et les valeurs correspondantes desdits défauts précédemment classés.
